# EUROPÄISCHE PATENTSCHRIFT

(11) **EP 0 923 477 B1**
(45) Veröffentlichungstag und Bekanntmachung des Hinweises auf die Patenterteilung: **26.02.2003**
(21) Anmeldenummer: 97919003.0
(22) Anmeldetag: 26.08.1997
(51) Int. Cl.: B60T 13/68, B60T 8/48

(54) **HYDRAULISCHE BREMSANLAGE FÜR EIN LANDFAHRZEUG**
HYDRAULIC BRAKING SYSTEM FOR AN OFF-ROAD VEHICLE
SYSTEME DE FREINAGE HYDRAULIQUE POUR UN VEHICULE TOUS TERRAINS

(30) Priorität: 02.09.1996 DE 19635573; 02.09.1996 DE 19635572
(43) Veröffentlichungstag der Anmeldung: 23.06.1999
(73) Patentinhaber: Lucas Industries Limited, West Midlands B90 4LA (GB)
(72) Erfinder: GILLES, Leo, D-56077 Koblenz (DE); BRASCHEL, Volker, D-56564 Neuwied (DE)
(74) Vertreter: Schmidt, Steffen J., Dipl.-Ing.
(86) Internationale Anmeldenummer: EP9704641
(87) Internationale Veröffentlichungsnummer: WO98009858

(56) Entgegenhaltungen:
- EP-A- 0 728 646
- DE-A- 4 142 004
- GB-A- 2 262 579

## Beschreibung

Die Erfindung betrifft eine hydraulische Fahrzeugbremsanlage für ein Landfahrzeug. Derartige Fahrzeugbremsanlagen sind im Stand der Technik in den vielfältigsten Ausgestaltungen bekannt. Insbesondere Fahrzeugbremsanlagen, die im Blockierschutzbetrieb ABS und/oder solche die im sog. Traction Control-Betrieb TC arbeiten können, finden immer mehr Verbreitung. Allerdings fordert der steigende Kostendruck in der Automobilindustrie noch kostengünstigere Lösungen als bisher bei praktisch gleichen Leistungsanforderungen.

Aus der GB 2 262 579 A ist eine hydraulische Fahrzeugbremsanlage mit einer Pumpe zum Fördern von Hydraulikfluid bekannt. Eine Auslaßseite der Pumpe ist über in jeweiligen Bremsleitungen angeordnete Magnetventile mit Radbremsen verbindbar.

Der Erfindung liegt daher die Aufgabe zugrunde, eine ABS- und TC-fähige Fahrzeugbremsanlage mit geringerem Herstellungsaufwand anzugeben.

Zur Lösung dieser Aufgabe weist die erfindungsgemäße Fahrzeugbremsanlage einen durch ein Bremspedal betätigbaren Bremskraftverstärker, der einen Hauptbremszylinder und ein Reservoir für Hydraulikfluid aufweist, eine mit einem ersten Fahrzeugrad gekoppelte erste Bremseinrichtung, die durch eine elektronisch gesteuerte erste Ventilanordnung in einer ersten Stellung mit dem Hauptbremszylinder verbindbar oder in einer zweiten Stellung von diesem trennbar ist, eine mit einem zweiten Fahrzeugrad gekoppelte zweite Bremseinrichtung, die durch eine zweite Ventilanordnung in einer ersten Stellung mit dem Hauptbremszylinder verbindbar oder in einer zweiten Stellung von diesem trennbar ist, eine der ersten Ventilanordnung nachgeschaltete dritte Ventilanordnung, durch die in einer ersten Stellung die erste Bremseinrichtung von einem Druckspeicher und einer Einlaßseite einer Pumpe trennbar oder in einer zweiten Stellung mit dem Druckspeicher bzw. der Einlaßseite der Pumpe verbindbar ist, eine der zweiten Ventilanordnung nachgeschaltete vierte Ventilanordnung, durch die in einer ersten Stellung die zweite Bremseinrichtung von einem Druckspeicher und der Einlaßseite der Pumpe trennbar oder in einer zweiten Stellung mit dem Druckspeicher bzw. der Einlaßseite der Pumpe verbindbar ist, auf, wobei die Auslaßseite der Pumpe mit wenigstens einer der beiden Bremseinrichtungen unmittelbar verbunden ist.

Dieser Aufbau ermöglicht aus folgenden Gründen unter anderem den Einsatz einer wesentlich kleineren und damit kostengünstigeren Pumpe:

Das während der Druckabbauphasen eines Blockierschutzbetriebes in den Druckspeicher abgelassene Hydraulikfluid wird nicht mehr in den Hauptbremszylinder zurückgefördert, sondern kann direkt in die Bremseinrichtung gefördert werden. Die von der Pumpe maximal bereitzustellende Pumpenleistung kann also in Bezug auf die Bremsleistung des Hauptbremszylinder deutlich verringert sein. Da die Pumpe nicht mehr gegen den vom Hauptbremszylinder ausgeübten Druck fördern muß, ergeben sich deutliche Vorteile in Bezug auf Komfort und Geräuschentwicklung. Außerdem kann diese erheblich kleiner dimensionierbare Pumpe ggf. zusammen mit den Ventilanordnungen auch in den Hauptbremszylinder bzw. den Bremskraftverstärker baulich integriert sein.

Vorzugsweise sind die erste, die zweite, die dritte, und/oder die vierte Ventilanordnung jeweils durch eine Federanordnung in ihre jeweilige erste Stellung gedrängt und durch eine jeweilige Elektromagnetanordnung in ihre jeweilige zweite Stellung überführbar.

Weiterhin ist der Druckspeicher federbelastet, wobei dessen Federanordnung so dimensioniert ist, daß bei einem Bremsvorgang aus dem Hauptbremszylinder in eine der Bremseinrichtungen gepreßtes Hydraulikfluid bei gesperrter erster und/oder zweiter Ventilanordnung und bei geöffneter dritter und/oder vierter Ventilanordnung in den Druckspeicher fließen kann.

Aus Sicherheitsgründen sind die erste und/oder die zweite Ventilanordnung durch ein zu dem Hauptbremszylinder hin öffnendes Rückschlagventil überbrückt.

In einer ersten Ausführungsform der erfindungsgemäßen Fahrzeugbremsanlage ist die Auslaßseite der Pumpe mit der zweiten Bremseinrichtung verbunden.

In einer zweiten Ausführungsform der erfindungsgemäßen Fahrzeugbremsanlage ist die Auslaßseite der Pumpe mit der ersten Bremseinrichtung verbunden.

In einer weiteren Ausführungsform der erfindungsgemäßen Fahrzeugbremsanlage ist die Auslaßseite der Pumpe mit der zweiten Bremseinrichtung durch eine fünfte Ventilanordnung in einer betätigten zweiten Stellung verbunden und in einer unbetätigten ersten Stellung ist die Auslaßseite der Pumpe von der zweiten Bremseinrichtung getrennt, und die Auslaßseite der Pumpe ist mit der ersten Bremseinrichtung verbunden.

In einer noch anderen Ausführungsform der erfindungsgemäßen Fahrzeugbremsanlage ist die Auslaßseite der Pumpe durch die fünfte Ventilanordnung in einer betätigten zweiten Stellung mit der ersten Bremseinrichtung verbunden, und in einer unbetätigten ersten Stellung ist die Auslaßseite der Pumpe von der ersten Bremseinrichtung getrennt, während die Auslaßseite der Pumpe mit der zweiten Bremseinrichtung verbunden ist.

Vorzugsweise ist die Förderleistung der Pumpe so dimensioniert, daß die durch die Pumpe an ihrer Auslaßseite bereitstellbare Druckaufbaurate nicht größer ist als die erforderliche Druckaufbaurate von vorzugsweise etwa 150 bar/sec in der ersten und/oder zweiten Bremseinrichtung.

Dabei kann die Pumpe als Magnetventilpumpe, als Vakuumactuator oder dergl. mit einem maximal bereitstellbaren Druckniveau von etwa 50 bar ausgebildet sein.

Zur Lösung dieser Aufgabe weist in einer Alternative die erfindungsgemäße Fahrzeugbremsanlage einen durch ein Bremspedal betätigbaren Bremskraftverstärker, der einen Hauptbremszylinder und ein Reservoir für Hydraulikfluid aufweist, eine mit einem ersten Fahrzeugrad gekoppelte erste Bremseinrichtung, die durch eine elektronisch gesteuerte erste Ventilanordnung in einer ersten Stellung mit dem Hauptbremszylinder verbindbar oder in einer zweiten Stellung von diesem trennbar ist, eine mit einem zweiten Fahrzeugrad gekoppelte zweite Bremseinrichtung, die durch eine der ersten Ventilanordnung nachgeschaltete zweite Ventilanordnung in einer ersten Stellung mit dem Hauptbremszylinder verbindbar oder in einer zweiten Stellung von diesem trennbar ist, und eine der zweiten Ventilanordnung nachgeschaltete dritte Ventilanordnung auf, durch die in einer ersten Stellung zumindest die zweite Bremseinrichtung von einem Druckspeicher und einer Einlaßseite einer Pumpe trennbar oder in einer zweiten Stellung mit dem Druckspeicher bzw. der Pumpe verbindbar ist.

Dieser Aufbau ermöglicht aus folgenden Gründen unter anderem den Einsatz einer wesentlich kleineren und damit kostengünstigeren Pumpe:

Das während der Druckabbauphasen eines Blockierschutzbetriebes in den Druckspeicher abgelassene Hydraulikfluid wird nicht mehr in den Hauptbremszylinder zurückgefördert, sondern kann direkt in die Bremseinrichtung gefördert werden. Die von der Pumpe maximal bereitzustellende Pumpenleistung kann also in Bezug auf die Bremsleistung des Hauptbremszylinder deutlich verringert sein. Da die Pumpe nicht mehr gegen den vom Hauptbremszylinder ausgeübten Druck fördern muß, ergeben sich deutliche Vorteile in Bezug auf Komfort und Geräuschentwicklung. Außerdem kann diese erheblich kleiner dimensionierbare Pumpe ggf. zusammen mit den Ventilanordnungen auch in den Hauptbremszylinder bzw. den Bremskraftverstärker baulich integriert sein.

Vorzugsweise werden die erste, die zweite und die dritte Ventilanordnung jeweils durch eine Federanordnung in ihre jeweilige erste Stellung gedrängt und sind durch eine jeweilige Elektromagnetanordnung in ihre jeweilige zweite Stellung überführbar.

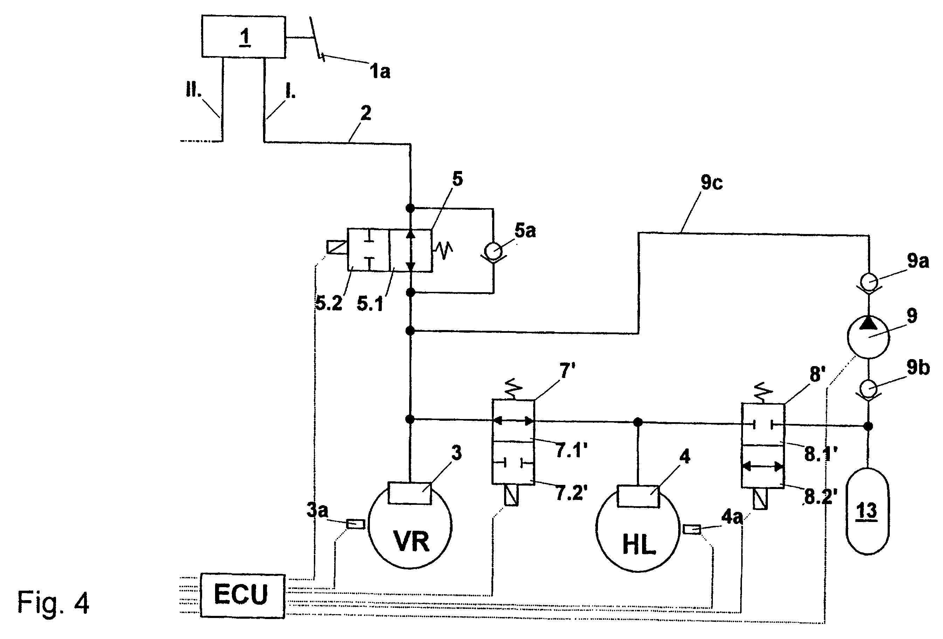

In einer ersten erfindungsgemäßen Ausführungsform ist eine Auslaßseite der Pumpe mit der ersten Bremseinrichtung verbunden (Fig. 4).

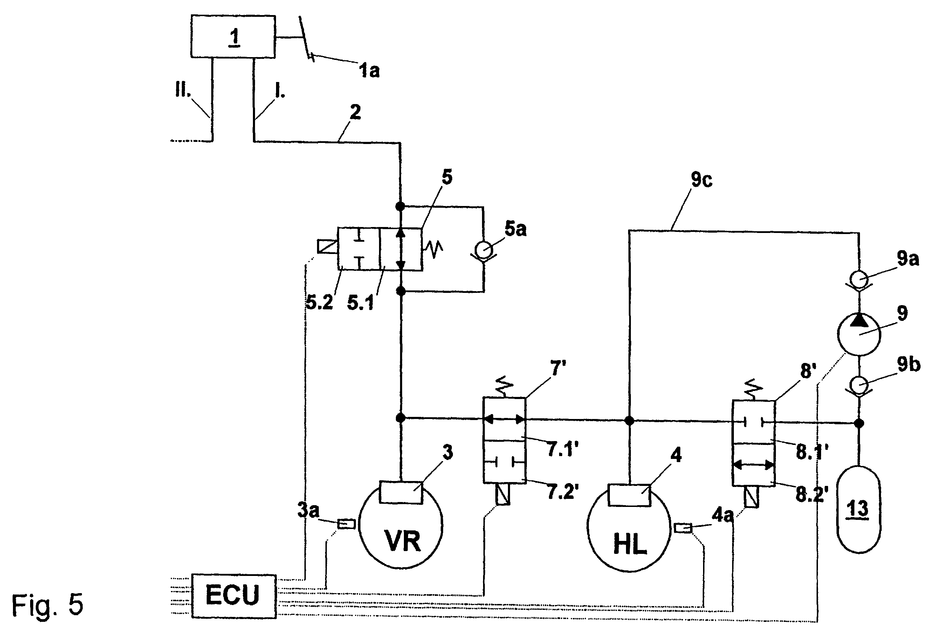

In einer zweiten erfindungsgemäßen Ausführungsform ist die Auslaßseite der Pumpe mit der zweiten Bremseinrichtung verbunden (Fig. 5).

Aus Sicherheitsgründen ist die erste Ventilanordnung durch ein zu dem Hauptbremszylinder hin öffnendes Rückschlagventil überbrückt.

Erfindungsgemäß ist die Förderleistung der Pumpe so dimensioniert, daß die durch die Pumpe an ihrer Auslaßseite bereitstellbare Druckaufbaurate nicht größer ist als die erforderliche Druckaufbaurate von vorzugsweise etwa 150 bar/sec in der ersten und/oder der zweiten Bremseinrichtung.

Dazu kann erfindungsgemäß die Pumpe als Magnetventilpumpe, als Vakuumactuator oder dergl. mit einem maximal bereitstellbaren Druckniveau von etwa 50 bar ausgebildet sein.

Weitere Eigenschaften, Merkmale und Vorteile der erfindungsgemäßen Fahrzeugbremsanlage werden anhand der nachstehenden Beschreibung von fünf Ausführungsbeispielen deutlich.
- Fig. 1: zeigt eine erste Ausführungsform einer erfindungsgemäßen Fahrzeugbremsanlage in schematischer Darstellung.
- Fig. 2: zeigt eine zweite Ausführungsform einer erfindungsgemäßen Fahrzeugbremsanlage in schematischer Darstellung.
- Fig. 3: zeigt eine dritte Ausführungsform einer erfindungsgemäßen Fahrzeugbremsanlage in schematischer Darstellung.
- Fig. 4: zeigt eine vierte Ausführungsform einer erfindungsgemäßen Fahrzeugbremsanlage in schematischer Darstellung.
- Fig. 5: zeigt eine fünfte Ausführungsform einer erfindungsgemäßen Fahrzeugbremsanlage in schematischer Darstellung.

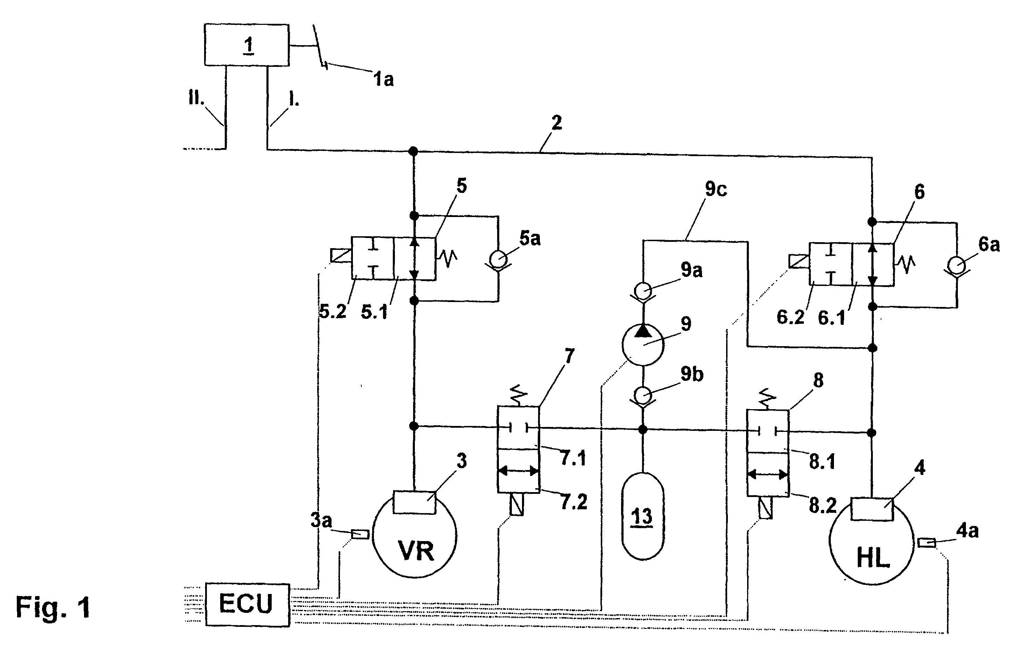

Die in den Fig. 1 bis 3 veranschaulichten Fahrzeugbremsanlagen sind neben einem Normalbremsbetrieb sowohl ABS- als auch TC-fähig.

Dazu weist die in Fig. 1 veranschaulichte Fahrzeugbremsanlage einen zweikreisigen Hauptbremszylinder 1 auf, der ein nicht veranschaulichtes Reservoir aufweist und mit einem Bremspedal 1a betätigbar ist. Ein erster Bremskreis I ist zur Betätigung von Radbremsen 3,4 bestimmt, die dem rechten Vorderrad VR und dem linken Hinterrad HL des Fahrzeugs zugeordnet werden. An einem zweiten Bremskreis II sind nicht veranschaulichte Radbremsen des linken Vorderrades VL und des rechten Hinterrades HR angeschlossen. Beide Bremskreise I und II sind baugleich ausgestattet. Nachstehend wird daher lediglich der Bremskreis I detaillierter beschrieben.

In dem Bremskreis I führt eine erste Leitung 2 von dem Hauptbremszylinder 1 zu einem Radbremszylinder der dem rechten Vorderrad VR zugeordneten Radbremse 3. In der Leitung 2 ist ein erstes 2/2-Wegeventil 5 angeordnet. Dieses nimmt federbetätigt seine normale Durchlaßstellung 5.1 und elektromagnetbetätigt seine Sperrstellung 5.2 ein. Dem ersten 2/2-Wegeventil 5 ist eine ebenfalls als 2/2-Wegeventil ausgestaltete zweite Ventilanordnung 6 parallel geschaltet, durch die eine mit einem zweiten Fahrzeugrad HR, HL gekoppelte Bremseinrichtung 4 mit dem Hauptbremszylinder 1 in einer ersten federbetätigten normalen Durchlaßstellung 6.1 verbunden ist. In einer zweiten Stellung 6.2 sperrt die zweite Ventilanordnung 6 die zweite Bremseinrichtung HR, HL gegenüber dem Hauptbremszylinder 1 ab.

Eine der ersten Ventilanordnung 5 nachgeschaltete dritte Ventilanordnung 7 trennt in einer ersten Stellung 7.1 die erste Bremseinrichtung VR von einem Druckspeicher 13 und einer Einlaßseite 9b einer Pumpe 9 und verbindet in einer zweiten Stellung 6.2 die erste Bremseinrichtung VR mit dem Druckspeicher 13 bzw. der Einlaßseite 9b der Pumpe 9. Des weiteren ist an der Einlaßseite 9b der Pumpe 9 ein zur Pumpe hin öffnendes Rückschlagventil und an der Auslaßseite 9a der Pumpe ein zur Pumpe hin sperrendes Rückschlagventil vorgesehen. Üblicherweise sind die Rückschlagventile in die Pumpe 9 integriert.

Eine der zweiten Ventilanordnung 6 nachgeschaltete vierte Ventilanordnung 8 trennt in einer ersten Stellung 8.1 die zweite Bremseinrichtung HL von einem Druckspeicher 13 und der Einlaßseite 9b der Pumpe 9 und verbindet in einer zweiten Stellung 8.2 die zweite Bremseinrichtung HL mit dem Druckspeicher 13 bzw. der Einlaßseite 9b der Pumpe 9.

Bei der Ausführungsform gemäß Fig. 1 ist die Auslaßseite 9a der Pumpe 9 mit der zweiten Bremseinrichtung HL, HR direkt verbunden. Damit ist eine bevorzugte Druckbeaufschlagung der zweiten Bremseinrichtung mit Hydraulikdruck aus der Pumpe 9 möglich, wobei bei gefülltem Druckspeicher 13 auch ein Traction-Control-Betrieb der zweiten Bremseinrichtung möglich ist.

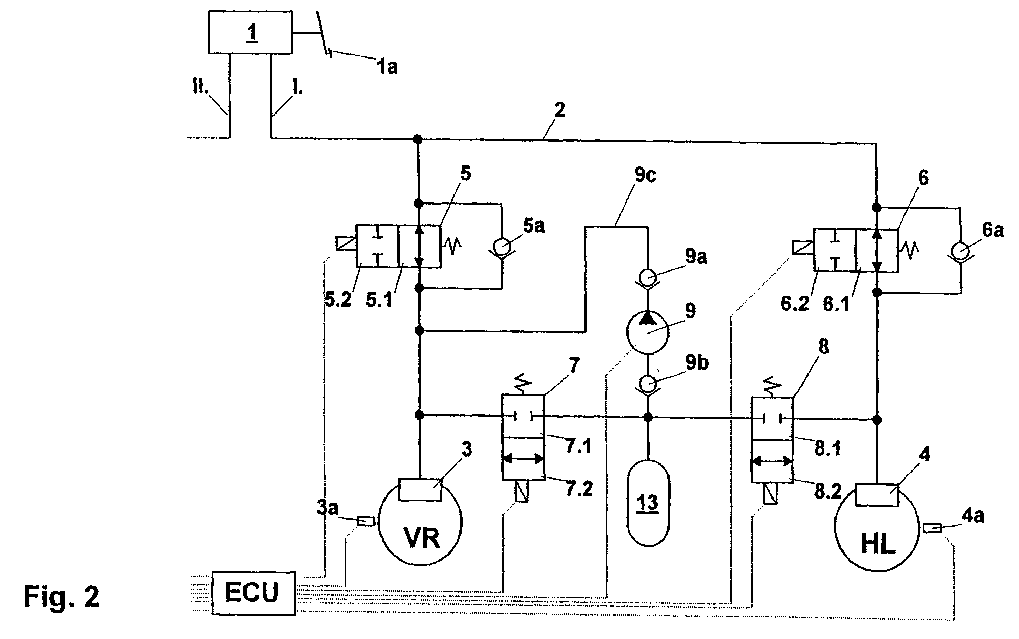

Bei der Ausführungsform gemäß Fig. 2 ist die Auslaßseite 9a der Pumpe 9 mit der ersten Bremseinrichtung VL, VR direkt verbunden. Damit ist eine bevorzugte Druckbeaufschlagung der ersten Bremseinrichtung mit Hydraulikdruck aus der Pumpe 9 möglich, wobei bei gefülltem Druckspeicher 13 auch ein Traction-Control-Betrieb der ersten Bremseinrichtung möglich ist.

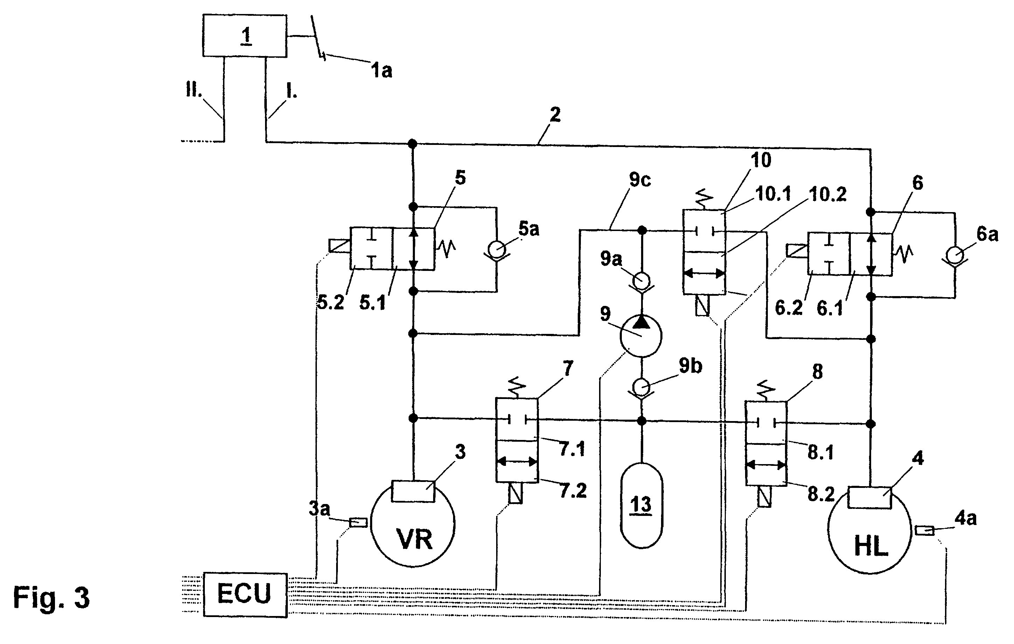

Bei der Ausführungsform gemäß Fig. 3 ist die Auslaßseite 9a der Pumpe 9 mit der zweiten Bremseinrichtung HL, HR durch eine fünfte Ventilanordnung 10 in einer betätigten zweiten Stellung 10.2 verbunden und in einer unbetätigten ersten Stellung 10.1 der fünften Ventilanordnung 10 ist die Auslaßseite 9a der Pumpe 9 von der zweiten Bremseinrichtung HL, HR getrennt ist. Die Auslaßseite 9a der Pumpe 9 ist mit der ersten Bremseinrichtung VL, VR stets direkt verbunden. Damit ist eine bevorzugte direkte Druckbeaufschlagung der ersten Bremseinrichtung mit Hydraulikdruck aus der Pumpe 9 möglich, wobei bei gefülltem Druckspeicher 13 auch ein Traction-Control-Betrieb der ersten Bremseinrichtung möglich ist. Daneben kann auch die zweite Bremseinrichtung in Abhängigkeit von der Stellung der fünften Ventilanordnung 10 mit Hydraulikdruck aus der Pumpe 9 beaufschlagt werden.

Allen drei Ausführungsformen ist gemeinsam, daß die erste, die zweite, die dritte, und die vierte Ventilanordnung 5, 6, 7, 8 (bzw. auch die fünfte Ventilanordnung 10 der Fig. 3) jeweils durch eine Federanordnung in ihre jeweilige erste Stellung 5.1, 6.1, 7.1, 8.1 (bzw. 10.1) gedrängt werden und durch eine jeweilige Elektromagnetanordnung in ihre jeweilige zweite Stellung 5.2, 6.2, 7.2, 8.2 (bzw. 10.2) überführbar sind.

Weiterhin ist bei allen drei Ausführungsformen der Druckspeicher 13 federbelastet, wobei die Federanordnung in dem Druckspeicher 13 so dimensioniert ist, daß bei einem Bremsvorgang aus dem Hauptbremszylinder 1 in eine der Bremseinrichtungen VR, VL, HR, HL gepreßtes Hydraulikfluid bei gesperrter 5.2, 6.2 erster bzw. zweiter Ventilanordnung 5, 6 und bei geöffneter 7.2, 8.2 dritter bzw. vierter Ventilanordnung 7, 8 in den Druckspeicher 13 fließen kann. Dies setzt noch voraus, daß die Pumpe 9 unbetätigt ist, da sonst die Pumpe 9 das anfallende Hydraulikfluid direkt abpumpt.

Außerdem sind bei allen drei Ausführungsformen die erste und die zweite Ventilanordnung 5, 6 durch ein zu dem Hauptbremszylinder 1 hin öffnendes Rückschlagventil 5a, 6a überbrückt.

Die Förderleistung der Pumpe 9 ist so dimensioniert, daß die durch die Pumpe an ihrer Auslaßseite bereitstellbare Druckaufbaurate nicht größer ist als die erforderliche Druckaufbaurate etwa 150 bar/sec in der ersten und zweiten Bremseinrichtung. Dazu kann die Pumpe als Magnetventilpumpe, als Vakuumactuator oder dergl. mit einem maximal bereitstellbaren Druckniveau von etwa 50 bar ausgebildet sein.

An den Fahrzeugrädern sind jeweils Raddrehungssensoren 3a, 4a vorgesehen, deren Signale einem elektronischen Steuergerät ECU zugeführt werden, das unter anderem in Abhängigkeit von den Signalen der Raddrehungssensoren 3a, 4a die erste, zweite, dritte und vierte sowie ggf. die fünfte Ventilanordnung 5, 6, 7, 8, 10 betätigt.

Durch die Anordnung der ersten und dritten bzw. der zweiten und vierten Ventilanordnung 5, 7 bzw. 6, 8 mit der Verbindung zu der Einlaßseite der Pumpe 9 zwischen der dritten und vierten Ventilanordnung 7, 8 ist es möglich, durch entsprechende Ansteuerung der elektromagnetisch betätigten Ventilanordnungen 5, 6, 7, 8 Druckaufbau, Druckabbau und Druckhaltephasen in den beiden Bremseinrichtungen zu realisieren. Damit kann sowohl ein Normalbremsbetrieb als auch ein blockiergeschützter Bremsbetrieb mit der erfindungsgemäßen Fahrzeugbremsanlage erreicht werden.

Wie bereits erwähnt, ist auch ein Traction-Control-Betrieb möglich, bei dem durch Abbremsen ein Durchdrehen der angetriebenen Fahrzeugräder verhindert wird. Da beim Traction-Control-Betrieb in der Regel keine Betätigung des Hauptbremszylinders 1 über das Bremspedal 1a erfolgt, muß der erforderliche Bremsdruck von der Pumpe 9 erzeugt werden. Soll bei der Ausführungsform nach Fig. 1 Traction-Control am linken Hinterrad HL erfolgen, so wird die dritte Ventilanordnung 7 in ihre geöffnete Stellung 7.2 und die zweite Ventilanordnung 6 in ihre gesperrte Stellung 6.2 überführt, so daß die Einlaßseite der Pumpe 9 mit dem Hauptbremszylinder 1 und die Auslaßseite 9a der Pumpe 9 mit der zweiten Bremseinrichtung HL verbunden ist. Dadurch kann die Pumpe 9 Hydraulikfluid aus dem Reservoir des Hauptbremszylinders 1 ansaugen, um die zweite Bremseinrichtung HL mit Hydraulikfluid zu beaufschlagen. Bei der Ausführungsform nach Fig. 2 ist Traction-Control-Betrieb am rechten Vorderrad VR möglich. Hierzu wird in analoger Weise die vierte Ventilanordnung 8 in ihre geöffnete Stellung 8.2 und die erste Ventileinrichtung 5 in ihre gesperrte Stellung 5.2 überführt, so daß die Einlaßseite der Pumpe 9 mit dem Hauptbremszylinder 1 und die Auslaßseite 9a der Pumpe 9 mit der ersten Bremseinrichtung VR verbunden ist. Dies gilt in gleicher Weise für die Ausführungsform nach Fig. 3, wobei dann im Traction-Control-Betrieb die fünfte Ventilanordnung 10 in ihrer gesperrten Stellung 10.1 verbleibt.

Die in den Fig. 4, 5 veranschaulichten Fahrzeugbremsanlagen sind neben einem Normalbremsbetrieb auch ABS-fähig.

Dazu weist die in Fig. 4 veranschaulichte Fahrzeugbremsanlage einen zweikreisigen Hauptbremszylinder 1 auf, der ein nicht veranschaulichtes Reservoir aufweist und mit einem Bremspedal 1a betätigbar ist. Ein erster Bremskreis I ist zur Betätigung von Radbremsen 3,4 bestimmt, die dem rechten Vorderrad VR und dem linken Hinterrad HL des Fahrzeugs zugeordnet werden. An einem zweiten Bremskreis II sind nicht veranschaulichte Radbremsen des linken Vorderrades VL und des rechten Hinterrades HR angeschlossen. Beide Bremskreise I und II sind baugleich ausgestattet. Nachstehend wird daher lediglich der Bremskreis I detaillierter beschrieben.

In dem Bremskreis I führt eine erste Leitung 2 von dem Hauptbremszylinder 1 zu einem Radbremszylinder der dem rechten Vorderrad VR zugeordneten Radbremse 3. In der Leitung 2 ist ein erstes 2/2-Wegeventil 5 angeordnet. Dieses nimmt federbetätigt seine normale Durchlaßstellung 5.1 und elektromagnetbetätigt seine Sperrstellung 5.2 ein. Dem ersten 2/2-Wegeventil 5 ist eine ebenfalls als 2/2-Wegeventil ausgestaltete zweite Ventilanordnung 7' nachgeschaltet, durch die eine mit einem zweiten Fahrzeugrad HR, HL gekoppelte Bremseinrichtung 4 mit dem Hauptbremszylinder 1 in einer ersten federbetätigten normalen Durchlaßstellung 7.1' verbunden ist (sofern auch die erste Ventilanordnung 5 in ihrer ersten federbetätigten normalen Durchlaßstellung 5.1 ist). In einer zweiten Stellung 7.2' sperrt die zweite Ventilanordnung 7' die zweite Bremseinrichtung HR, HL gegenüber dem Hauptbremszylinder 1 ab.

Eine der zweiten Ventilanordnung 7' nachgeschaltete dritte Ventilanordnung 8' trennt in einer ersten Stellung 8.1' die zweite Bremseinrichtung HL von einem Druckspeicher 13 und einer Einlaßseite 9b einer Pumpe 9 und verbindet in einer zweiten Stellung 8.2' die zweite Bremseinrichtung HL mit dem Druckspeicher 13 bzw. der Einlaßseite 9b der Pumpe 9. Des weiteren ist an der Einlaßseite 9b der Pumpe 9 ein zur Pumpe hin öffnendes Rückschlagventil und an der Auslaßseite 9a der Pumpe ein zur Pumpe hin sperrendes Rückschlagventil vorgesehen. Üblicherweise sind die Rückschlagventile in die Pumpe 9 integriert.

Bei der Ausführungsform gemäß Fig. 4 ist die Auslaßseite 9a der Pumpe 9 mit der ersten Bremseinrichtung VL, VR direkt verbunden. Damit ist eine bevorzugte Druckbeaufschlagung der ersten Bremseinrichtung mit Hydraulikdruck aus der Pumpe 9 möglich.

Bei der Ausführungsform gemäß Fig. 5 ist die Auslaßseite 9a der Pumpe 9 mit der zweiten Bremseinrichtung HL, HR direkt verbunden. Damit ist eine bevorzugte Druckbeaufschlagung der zweiten Bremseinrichtung mit Hydraulikdruck aus der Pumpe 9 möglich.

Beiden Ausführungsformen ist gemeinsam, daß die erste, die zweite, und die dritte Ventilanordnung 5, 7, 8' jeweils durch eine Federanordnung in ihre jeweilige erste Stellung 5.1, 7.1', 8.1' gedrängt werden und durch eine jeweilige Elektromagnetanordnung in ihre jeweilige zweite Stellung 5.2, 7.2', 8.2' überführbar sind.

Weiterhin ist bei beiden Ausführungsformen der Druckspeicher 13 federbelastet, wobei die Federanordnung in dem Druckspeicher 13 so dimensioniert ist, daß bei einem Bremsvorgang in eine der Bremseinrichtungen VR, VL, HR, HL gepreßtes Hydraulikfluid bei gesperrter erster Ventilanordnung 5 (Stellung 5.2) , geöffneter zweiter Ventilanordnung 7' (Stellung 7.1') und bei geöffneter dritter Ventilanordnung 8' (Stellung 8.2') in den Druckspeicher 13 fließen kann. Dies setzt noch voraus, daß die Pumpe 9 unbetätigt ist, da sonst die Pumpe 9 das anfallende Hydraulikfluid direkt abpumpt.

Außerdem ist bei beiden Ausführungsformen die erste Ventilanordnung 5 durch ein zu dem Hauptbremszylinder 1 hin öffnendes Rückschlagventil 5a überbrückt.

Die Förderleistung der Pumpe 9 ist so dimensioniert, daß die durch die Pumpe an ihrer Auslaßseite bereitstellbare Druckaufbaurate nicht größer ist als die erforderliche Druckaufbaurate etwa 150 bar/sec in der ersten und zweiten Bremseinrichtung. Dazu kann die Pumpe als Magnetventilpumpe, als Vakuumactuator oder dergl. mit einem maximal bereitstellbaren Druckniveau von etwa 50 bar ausgebildet sein.

An den Fahrzeugrädern sind jeweils Raddrehungssensoren 3a, 4a vorgesehen, deren Signale einem elektronischen Steuergerät ECU zugeführt werden, das unter anderem in Abhängigkeit von den Signalen der Raddrehungssensoren 3a, 4a die erste, zweite, dritte und vierte sowie ggf. die fünfte Ventilanordnung 5, 6, 7, 8, 10 betätigt.

Durch die Anordnung der Ventilanordnungen mit der Verbindung zu der Pumpe 9 ist es möglich, durch entsprechende Ansteuerung der elektromagnetisch betätigten Ventilanordnungen 5, 6, 8 Druckaufbau, Druckabbau und Druckhaltephasen in den beiden Bremseinrichtungen zu realisieren. Damit kann sowohl ein Normalbremsbetrieb als auch ein blockiergeschützter Bremsbetrieb mit der erfindungsgemäßen Fahrzeugbremsanlage erreicht werden.

## Patentansprüche

1. Hydraulische Fahrzeugbremsanlage für ein Landfahrzeug, mit
- einem durch ein Bremspedal (1a) betätigbaren Bremskraftverstärker, der einen Hauptbremszylinder (1) und ein Reservoir für Hydraulikfluid aufweist,
- einer mit einem ersten Fahrzeugrad gekoppelten ersten Bremseinrichtung (VR, VL), die durch eine elektronisch gesteuerte erste Ventilanordnung (5) in einer ersten Stellung (5.1) mit dem Hauptbremszylinder (1) verbindbar oder in einer zweiten Stellung (5.2) von diesem trennbar ist,
- einer mit einem zweiten Fahrzeugrad gekoppelten zweiten Bremseinrichtung (HR, HL), die durch eine zweite Ventilanordnung (6) in einer ersten Stellung (6.1) mit dem Hauptbremszylinder (1) verbindbar oder in einer zweiten Stellung (6.2) von diesem trennbar ist,
- einer der ersten Ventilanordnung (5) nachgeschalteten dritten Ventilanordnung (7), durch die in einer ersten Stellung (7.1) die erste Bremseinrichtung (VR) von einem Druckspeicher (13) und einer Einlaßseite (9b) einer Pumpe (9) trennbar oder in einer zweiten Stellung (6.2) mit dem Druckspeicher (13) bzw. der Einlaßseite (9b) der Pumpe (9) verbindbar ist,
- einer der zweiten Ventilanordnung (6) nachgeschalteten vierten Ventilanordnung (8), durch die in einer ersten Stellung (8.1) die zweite Bremseinrichtung (HL) von einem Druckspeicher (13) und der Einlaßseite (9b) der Pumpe (9) trennbar oder in einer zweiten Stellung (8.2) mit dem Druckspeicher (13) bzw. der Einlaßseite (9b) der Pumpe (9) verbindbar ist, **dadurch gekennzeichnet daß**,
- die Auslaßseite (9a) der Pumpe (9) mit wenigstens einer der beiden Bremseinrichtungen (VL, HL) unmittelbar verbunden ist.

2. Hydraulische Fahrzeugbremsanlage nach Anspruch 1, **dadurch gekennzeichnet, daß**
- die erste, die zweite, die dritte, und/oder die vierte Ventilanordnung (5, 6, 7,8) jeweils durch eine Federanordnung in ihre jeweilige erste Stellung (5.1, 6.1, 7.1, 8.1) gedrängt werden und durch eine jeweilige Elektromagnetanordnung in ihre jeweilige zweite Stellung (5.2, 6.2, 7.2, 8.2) überführbar sind.

3. Hydraulische Fahrzeugbremsanlage nach Anspruch 1 oder 2, **dadurch gekennzeichnet, daß**
- der Druckspeicher (13) federbelastet ist, wobei die Federanordnung so dimensioniert ist, daß bei einem Bremsvorgang aus dem Hauptbremszylinder (1) in eine der Bremseinrichtungen (VR, VL, HR, HL) gepreßtes Hydraulikfluid bei gesperrter (5.2, 6.2) erster und/oder zweiter Ventilanordnung (5, 6) und bei geöffneter (7.2, 8.2) dritter und/oder vierter Ventilanordnung (7, 8) in den Druckspeicher (13) fließen kann.

4. Hydraulische Fahrzeugbremsanlage nach einem der vorhergehenden Ansprüche, **dadurch gekennzeichnet, daß**
- die erste und/oder die zweite Ventilanordnung (5, 6) durch ein zu dem Hauptbremszylinder (1) hin öffnendes Rückschlagventil (5a, 6a) überbrückt ist.

5. Hydraulische Fahrzeugbremsanlage nach einem der vorhergehenden Ansprüche, **dadurch gekennzeichnet, daß**
- die Auslaßseite (9a) der Pumpe (9) mit der zweiten Bremseinrichtung (VL, VR) verbunden ist (Fig. 1).

6. Hydraulische Fahrzeugbremsanlage nach einem der vorhergehenden Ansprüche, **dadurch gekennzeichnet, daß**
- die Auslaßseite (9a) der Pumpe (9) mit der ersten Bremseinrichtung (HL, HR) verbunden (Fig. 2).

7. Hydraulische Fahrzeugbremsanlage nach einem der vorhergehenden Ansprüche, **dadurch gekennzeichnet, daß**
- die Auslaßseite (9a) der Pumpe (9) mit der zweiten Bremseinrichtung (HL, HR) durch eine fünfte Ventilanordnung (10) in einer betätigten zweiten Stellung (10.2) verbunden ist und in einer unbetätigten ersten Stellung (10.1) die Auslaßseite (9a) der Pumpe (9) von der zweiten Bremseinrichtung (HL, HR) getrennt ist, und die Auslaßseite (9a) der Pumpe (9) mit der ersten Bremseinrichtung (VL, VR) verbunden ist (Fig. 3).

8. Hydraulische Fahrzeugbremsanlage nach einem der vorhergehenden Ansprüche, **dadurch gekennzeichnet, daß**
- die Auslaßseite (9a) der Pumpe (9) mit der ersten Bremseinrichtung (VL, VR) durch eine fünfte Ventilanordnung (10) in einer betätigten zweiten Stellung(10.2) verbunden ist und in einer unbetätigten ersten Stellung (10.1) die Auslaßseite (9a) der Pumpe (9) von der ersten Bremseinrichtung (VL, VR) getrennt ist, und die Auslaßseite (9a) der Pumpe (9) mit der zweiten Bremseinrichtung (HL, HR) verbunden ist.

9. Hydraulische Fahrzeugbremsanlage nach einem der vorhergehenden Ansprüche, **dadurch gekennzeichnet, daß**
- die Förderleistung der Pumpe (9) so dimensioniert ist, daß die durch die Pumpe an ihrer Auslaßseite bereitstellbare Druckaufbaurate nicht größer ist als die erforderliche Druckaufbaurate von vorzugsweise etwa 150 bar/sec in der ersten und/oder zweiten Bremseinrichtung.

10. Hydraulische Fahrzeugbremsanlage nach einem der vorhergehenden Ansprüche, **dadurch gekennzeichnet, daß**
- die Pumpe als Magnetventilpumpe, als Vakuumactuator oder dergl. mit einem maximal bereitstellbaren Druckniveau von etwa 50 bar ausgebildet ist.

11. Hydraulische Fahrzeugbremsanlage für ein Landfahrzeug, mit
- einem durch ein Bremspedal (1a) betätigbaren Bremskraftverstärker, der einen Hauptbremszylinder (1) und ein Reservoir für Hydraulikfluid aufweist,
- einer mit einem ersten Fahrzeugrad gekoppelten ersten Bremseinrichtung (VR, VL), die durch eine elektronisch gesteuerte erste Ventilanordnung (5) in einer ersten Stellung (5.1) mit dem Hauptbremszylinder (1) verbindbar oder in einer zweiten Stellung (5.2) von diesem trennbar ist,
- einer mit einem zweiten Fahrzeugrad gekoppelten zweiten Bremseinrichtung (HR, HL), **dadurch gekennzeichnet, daß** die zweite Bremseinrichtung (HR, HL) durch eine der ersten Ventilanordnung (5) nachgeschaltete zweite Ventilanordnung (7) in einer ersten Stellung (7.1) mit dem Hauptbremszylinder (1) verbindbar oder in einer zweiten Stellung (7.2) von diesem trennbar ist, und
- eine der zweiten Ventilanordnung nachgeschaltete dritte Ventilanordnung (8) vorhanden ist, durch die in einer ersten Stellung (8.1) zumindest die zweite Bremseinrichtung von einem Druckspeicher (13) und einer Einlaßseite (9b) einer Pumpe (9) trennbar oder in einer zweiten Stellung (8.2) mit dem Druckspeicher (13) bzw. der Pumpe (9) verbindbar ist.

12. Hydraulische Fahrzeugbremsanlage nach Anspruch 10, **dadurch gekennzeichnet, daß**
- die erste, die zweite und die dritte Ventilanordnung (5, 6, 7) jeweils durch eine Federanordnung in ihre jeweilige erste Stellung (5.1, 6.1, 7.1) gedrängt werden und durch eine jeweilige Elektromagnetanordnung in ihre jeweilige zweite Stellung (5.2, 6.2, 7.2) überführbar sind.

13. Hydraulische Fahrzeugbremsanlage nach Anspruch 11 oder 12, **dadurch gekennzeichnet, daß**
- eine Auslaßseite (9a) der Pumpe (9) mit der ersten Bremseinrichtung (VR) verbunden ist (Fig. 1).

14. Hydraulische Fahrzeugbremsanlage nach Anspruch 11 oder 12, **dadurch gekennzeichnet, daß**
- eine Auslaßseite (9a) der Pumpe (9) mit der zweiten Bremseinrichtung (HL) verbunden ist (Fig. 2).

15. Hydraulische Fahrzeugbremsanlage nach einem der vorhergehenden Ansprüche, **dadurch gekennzeichnet, daß**
- die erste Ventilanordnung (5) durch ein zu dem Hauptbremszylinder (1) hin öffnendes Rückschlagventil (5a) überbrückt ist.

16. Hydraulische Fahrzeugbremsanlage nach einem der vorhergehenden Ansprüche, **dadurch gekennzeichnet, daß**
- die Förderleistung der Pumpe (9) so dimensioniert ist, daß die durch die Pumpe an ihrer Auslaßseite bereitstellbare Druckaufbaurate nicht größer ist als die erforderliche Druckaufbaurate von vorzugsweise etwa 150 bar/sec in der ersten und/oder zweiten Bremseinrichtung.

17. Hydraulische Fahrzeugbremsanlage nach einem der vorhergehenden Ansprüche, **dadurch gekennzeichnet, daß**
- die Pumpe als Magnetventilpumpe, als Vakuumactuator oder dergl., vorzugsweise mit einem maximal bereitstellbaren Druckniveau von etwa 50 bar ausgebildet ist.

## Claims

1. A hydraulic vehicle braking system for land vehicles, comprising
- a brake booster which can be actuated via a brake pedal (la) and includes a master cylinder (1) and a reservoir for hydraulic fluid,
- a first brake means (VR, VL) which is coupled with a first vehicle wheel and which, in a first position (5.1), is connectable with the master cylinder (1) by means of an electronically controlled first valve arrangement (5) or which, in a second position (5.2), can be disconnected from same,
- a second brake means (HR, HL) which is coupled with a second vehicle wheel and which, in a first position (6.1), is connectable with the master cylinder (1) by means of a second valve arrangement (6) or which, in a second position (6.2), can be disconnected from same,
- a third valve arrangement (7) which is connected downstream of the first valve arrangement (5) and by means of which, in a first position (7.1), the first brake means (VR) can be disconnected from a pressure accumulator (13) and an inlet side (9b) of a pump (9) or, in a second position (6.2), can be connected with the pressure accumulator (13) or the inlet side (9b), respectively, of the pump (9),
- a fourth valve arrangement (8) which is connected downstream of the second valve arrangement (6) and by means of which, in a first position (8.1), the second brake means (HL) can be disconnected from a pressure accumulator (13) and the inlet side (9b) of the pump (9) or, in a second position (8.2), can be connected with the pressure accumulator (13) or the inlet side (9b), respectively, of the pump (9), **characterised in that**
- the outlet side (9a) of the pump (9) is directly connected with at least one of the two brake means.

2. The hydraulic vehicle braking system according to Claim 1, **characterised in that**
- the first, the second, the third, and/or the fourth valve arrangement (5, 6, 7, 8) each is urged into its respective first position (5.1, 6.1, 7.1, 8.1) by a spring arrangement and can be brought into its respective second position (5.2, 6.2, 7.2, 8.2) by a respective electromagnet arrangement.

3. The hydraulic vehicle braking system according to Claim 1 or 2, **characterised in that**
- the pressure accumulator (13) is spring-loaded, with the spring arrangement being dimensioned in such a manner that during a braking operation hydraulic fluid which was forced from the master cylinder (1) into one of the brake means (VR, VL, HR, HL) can flow into the pressure accumulator (13) with the first and/or second valve arrangement (5, 6) being blocked (5.2, 6.2) and the third and/or fourth valve arrangement (7, 8) being opened (7.2, 8.2).

4. The hydraulic vehicle braking system according to one of the previous claims, **characterised in that**
- the first and/or the second valve arrangement (5, 6) are/is bridged by a check valve (5a, 6a) which opens towards the master cylinder (1).

5. The hydraulic vehicle braking system according to one of the previous claims, **characterised in that**
- the outlet side (9a) of the pump (9) is connected with the second brake means (VL, VR) (Fig. 1).

6. The hydraulic vehicle braking system according to one of the previous claims, **characterised in that**
- the outlet side (9a) of the pump (9) is connected with the first brake means (HL, HR) (Fig. 2).

7. The hydraulic vehicle braking system according to one of the previous claims, **characterised in that**
- the outlet side (9a) of the pump (9) is connected with the second brake means (HL, HR) via a fifth valve arrangement (10) in an actuated second position (10.2), and, in a non-actuated first position (10.1), the outlet side (9a) of the pump (9) is disconnected from the second brake means (HL, HR), and the outlet side (9a) of the pump (9) is connected with the first brake means (VL, VR) (Fig 3).

8. The hydraulic vehicle braking system according to one of the previous claims, **characterised in that**
- the outlet side (9a) of the pump (9) is connected with the first brake means (VL, VR) via a fifth valve arrangement (10) in an actuated second position (10.2), and in a non-actuated first position (10.1) the outlet side (9a) of the pump (9) is disconnected from the first brake means (VL, VR), and the outlet side (9a) of the pump (9) is connected with the second brake means (HL, HR).

9. The hydraulic vehicle braking system according to one of the previous claims, **characterised in that**
- the delivery rate of the pump (9) is dimensioned in such a manner that the pressure build-up rate which can be provided by the pump at its outlet side is not higher than the required pressure build-up rate of preferably approx. 150 bar/sec in the first and/or second brake means.

10. The hydraulic vehicle braking system according to one of the previous claims, **characterised in that**
- the pump is designed as a magnetic valve pump, a vacuum actuator or the like with a maximum available pressure level of approx. 50 bar.

11. A hydraulic vehicle braking system for land vehicles, comprising
- a brake booster which can be actuated via a brake pedal (la) and includes a master cylinder (1) and a reservoir for hydraulic fluid,
- a first brake means (VR, VL) which is coupled with a first vehicle wheel and which, in a first position (5.1), is connectable with the master cylinder (1) by means of an electronically controlled first valve arrangement (5) or which, in a second position (5.2), can be disconnected from same,
- a second brake means (HR, HL) which is coupled with a second vehicle wheel, **characterised in that** the second brake means (HR, HL), in a first position (7.1), is connectable with the master cylinder (1) by means of a second valve arrangement (7) connected downstream of the first valve arrangement (5) or, in a second position (7.2), can be disconnected from same, and
- a third valve arrangement (8) which is connected downstream of the second valve arrangement and by means of which, in a first position (8.1), at least the second brake means can be disconnected from a pressure accumulator (13) and an inlet side (9b) of a pump (9) or, in a second position (7.2), can be connected with the pressure accumulator (13) or the pump (9), respectively.

12. The hydraulic vehicle braking system according to Claim 10, **characterised in that**
- the first, the second, and the third valve arrangement (5, 6, 7) each is urged into its respective first position (5.1, 6.1, 7.1) by a spring arrangement and can be brought into its respective second position (5.2, 6.2, 7.2) by a respective electromagnet arrangement.

13. The hydraulic vehicle braking system according to Claim 11 or 12, **characterised in that**
- an outlet side (9a) of the pump (9) is connected with the first brake means (VR) (Fig. 1).

14. The hydraulic vehicle braking system according to Claim 11 or 12, **characterised in that**
- an outlet side (9a) of the pump (9) is connected with the second brake means (HL) (Fig. 2).

15. The hydraulic vehicle braking system according to one of the previous claims, **characterised in that**
- the first valve arrangement (5) is bridged by a check valve (5a) which opens towards the master cylinder (1).

16. The hydraulic vehicle braking system according to one of the previous claims, **characterised in that**
- the delivery rate of the pump (9) is dimensioned in such a manner that the pressure build-up rate which can be provided by the pump at its outlet side is not higher than the required pressure build-up rate of preferably approx. 150 bar/sec in the first and/or second brake means.

17. The hydraulic vehicle braking system according to one of the previous claims, **characterised in that**
- the pump is designed as a magnetic valve pump, a vacuum actuator or the like, preferably with a maximum available pressure level of approx. 50 bar.

## Revendications

1. Système de freinage hydraulique de véhicule pour un véhicule routier, comportant
- un servofrein actionné par une pédale de frein (1a), qui présente un maître-cylindre de frein (1) et un réservoir pour fluide hydraulique,
- un premier dispositif de freinage (AV droit, AV gauche) couplé à une première roue du véhicule qui, par un premier dispositif de soupape (5) à commande électronique, est reliable en une première position (5.1) au maître-cylindre de frein (1) ou en une seconde position (5.2) est séparable de celui-ci,
- un deuxième dispositif de freinage (AR droit, AR gauche) couplé à une deuxième roue du véhicule qui, par un deuxième dispositif de soupape (6) est reliable en une première position (6.1) au maître-cylindre de frein (1) ou en une deuxième position (6.2) est séparable de celui-ci,
- un troisième dispositif de soupape (7) monté en aval du premier dispositif de soupape (5), par lequel, en une première position (7.1), le premier dispositif de freinage (AV droit) est séparable d'un accumulateur de pression (13) et d'un côté admission (9b) d'une pompe (9) ou, en une deuxième position (6.2), est reliable avec l'accumulateur de pression (13) ou le côté admission (9b) de la pompe (9),
- un quatrième dispositif de soupape (8) monté en aval du deuxième dispositif de soupape (6), par lequel, en une première position (8.1). le deuxième dispositif de freinage (AR gauche) est séparable d'un accumulateur de pression (13) et du côté admission (9b) de la pompe (9) ou, en une deuxième position (8.2), est reliable avec l'accumulateur de pression (13) ou le côté admission (9b) de la pompe (9), **caractérisé en ce que**
- le côté refoulement (9a) de la pompe (9) est relié directement au moins avec l'un des deux dispositifs de freinage (AV gauche, AR gauche).

2. Système de freinage hydraulique de véhicule selon la revendication 1, **caractérisé en ce que**
- le premier, le deuxième, le troisième et/ou le quatrième dispositifs de freinage (5, 6, 7, 8) sont poussés chacun par un dispositif de ressort à leur première position (5.1, 6.1, 7.1, 8.1) et peuvent être transférés, chacun par un dispositif électromagnétique, à leur deuxième position (5.2, 6.2, 7.2, 8.2).

3. Système de freinage hydraulique de véhicule selon la revendication 1 ou 2, **caractérisé en ce que**
- l'accumulateur de pression (13) est commandé par ressort, le dispositif de ressort étant dimensionné de façon que du fluide hydraulique poussé, lors d'une opération de freinage, hors du maître-cylindre de frein (1) dans l'un des dispositifs de freinage (AV droit, AV gauche, AR droit, AR gauche) puisse s'écouler dans l'accumulateur de pression (13), le premier et/ou le deuxième dispositif de soupape (5, 6) étant fermé (5.2, 6.2) et le troisième et/ou quatrième dispositif de soupape (7, 8) étant ouvert (7.2, 8.2).

4. Système de freinage hydraulique de véhicule selon l'une des revendications précédentes, **caractérisé en ce que**
- le premier et/ou le deuxième dispositif de soupape (5, 6) est court-circuité par un clapet anti-retour (5a, 6a) s'ouvrant vers le maître-cylindre de frein (1).

5. Système de freinage hydraulique de véhicule selon l'une des revendications précédentes, **caractérisé en ce que**
- le côté refoulement (9a) de la pompe (9) est relié avec le deuxième dispositif de freinage (AV gauche, AV droit) (fig. 1).

6. Système de freinage hydraulique de véhicule selon l'une des revendications précédentes, **caractérisé en ce que**
- le côté refoulement (9a) de la pompe (9) est relié avec le premier dispositif de freinage (AR gauche, AR droit) (fig. 2).

7. Système de freinage hydraulique de véhicule selon l'une des revendications précédentes, **caractérisé en ce que**
- le côté refoulement (9a) de la pompe (9) est relié avec le deuxièrne dispositif de freinage (AR gauche, AR droit) par un cinquième dispositif de soupape (10) à une deuxième position commandée (10.2) et, à une première position non commandée (10.1), le côté refoulement (9a) de la pompe (9) est séparé du premier dispositif de freinage (AR gauche, AR droit) et le côté refoulement (9a) de la pompe (9) est relié avec le premier dispositif de freinage (AV gauche, AV droit).

8. Système de freinage hydraulique de véhicule selon l'une des revendications précédentes, **caractérisé en ce que**
- le côté refoulement (9a) de la pompe (9) est relié avec le premier dispositif de freinage (AV gauche, AV droit) par un cinquième dispositif de soupape (10) à une deuxième position commandée (10.2) et, à une première position non commandée (10.1), le côté refoulement (9a) de la pompe (9) est séparé du premier dispositif de freinage (AV gauche, AV droit) et le côté refoulement (9a) de la pompe (9) est relié avec deuxième dispositif de freinage (AR gauche, AR droit).

9. Système de freinage hydraulique de véhicule selon l'une des revendications précédentes, **caractérisé en ce que**
- le débit de la pompe (9) est dimensionné de façon que le taux d'élévation de pression qui peut être mis à disposition par la pompe de son côté refoulement ne soit pas supérieur au taux d'élévation de pression nécessaire, de préférence d'environ 150 bar/sec., dans le premier et/ou le deuxième dispositif de freinage.

10. Système de freinage hydraulique de véhicule selon l'une des revendications précédentes, **caractérisé en ce que**
- la pompe est conçue en tant que pompe à électrovanne, en tant qu'actionneur de vide ou similaire, avec un niveau de pression disponible maximal d'environ 50 bar.

11. Système de freinage hydraulique de véhicule pour un véhicule routier, comportant
- un servofrein actionné par une pédale de frein (1a), qui présente un maître-cylindre de frein (1) et un réservoir pour fluide hydraulique,
- un premier dispositif de freinage (AV droit, AV gauche) couplé à une première roue du véhicule qui, par un premier dispositif de soupape (5) à commande électronique, est reliable en une première position (5.1) au maître-cylindre de frein (1) ou en une seconde position (5.2) est séparable de celui-ci,
- un deuxième dispositif de freinage (AR droit, AR gauche) couplé à une deuxième roue du véhicule, **caractérisé en ce que** le deuxième dispositif de freinage (AR droit, AR gauche) est, par un deuxième dispositif de soupape (7) monté en aval du premier dispositif de soupape (5), reliable en une première position (7.1) avec le maître-cylindre de frein (1) ou, en une deuxième position (7.2), est séparable de celui-ci et
- il existe un troisième dispositif de soupape (8) monté en aval du deuxième dispositif de soupape, par lequel, en une première position (8.1) au moins le deuxième dispositif de freinage est séparable d'un accumulateur de pression (13) et d'un côté admission (9b) d'une pompe (9) ou, en une deuxième position (8.2), est reliable avec l'accumulateur de pression (13) ou la pompe (9).

12. Système de freinage hydraulique de véhicule selon la revendication 10, **caractérisé en ce que**
- le premier, le deuxième, le troisième dispositifs de soupape (5.6, 7) sont poussés chacun par un dispositif de ressort à leur première position (5.1, 6.1, 7.1) et peuvent être transférés, chacun par un dispositif électromagnétique, à leur deuxième position (5.2, 6.2, 7.2).

13. Système de freinage hydraulique de véhicule selon la revendication 11, **caractérisé en ce que**
- un côté refoulement (9a) de la pompe (9) est relié avec le premier dispositif de freinage (AV droit) (fig. 1).

14. Système de freinage hydraulique de véhicule selon la revendication 11 ou 12, **caractérisé en ce que**
- un côté refoulement (9a) de la pompe (9) est relié avec le deuxième dispositif de freinage (AR gauche) (fig. 2).

15. Système de freinage hydraulique de véhicule selon l'une des revendications précédentes, **caractérisé en ce que**
- le premier dispositif de soupape (5) est court-circuité par un clapet anti-retour (5a) s'ouvrant vers le maître-cylindre de frein (1).

16. Système de freinage hydraulique de véhicule selon l'une des revendications précédentes, **caractérisé en ce que**
- le débit de la pompe (9) est dimensionné de façon que le taux d'élévation de pression qui peut être mis à disposition par la pompe de son côté refoulement ne soit pas supérieur au taux d'élévation de pression nécessaire, de préférence d'environ 150 bar/sec., dans le premier et/ou le deuxième dispositif de freinage.

17. Système de freinage hydraulique de véhicule selon l'une des revendications précédentes, **caractérisé en ce que**
- la pompe est conçue en tant que pompe à électrovanne, en tant qu'actionneur de vide ou similaire, avec un niveau de pression disponible maximal d'environ 50 bar.
